# EUROPEAN PATENT APPLICATION

(11) **EP 1 936 521 A1**
(43) Date of publication of application: **25.06.2008**
(21) Application number: 07101607.5
(22) Date of filing: 01.02.2007
(51) Int. Cl.: G06F 17/30

(54) **Identification registration system**

(30) Priority: 22.12.2006 NL 1033128
(71) Applicant: Nederlandse Organisatie voor toegepast- natuurwetenschappelijk onderzoek TNO, 2628 VK The Hague (NL)
(72) Inventor: The designation of the inventor has not yet been filed
(74) Representative: van Loon, C.J.J.

(57) **Abstract**

Identification registration system including a medium for registering identifier types, characterized by a symbol type and an identifier type name, context name and entity type name and by identifiers each of which consist of a symbol S and each of which are an instance of a registered identifier type. In addition, entities and entity types are registered in the medium, in which case it is registered for each entity E what entity types E is an instance of, and identifications are registered where each identification is a specification of one identifier ID and one entity E, where ID identifies E. All registrations are checked for compliance with rules pertaining to, respectively, the identifiers, identifier types, entities, entity types and/or identifications.

## Description

Identifiers have been a source of concern for years. Within the government there have been debates about SOFI number, Citizen Information Numbers (BINs), and Care Information Numbers. Between telecom operators similar discussions are held with regard to "public" and "private" identifiers. In large companies it is a constant problem when it must be decided what type of identifiers (e.g., for customer registration) can be used company-wide.

Identifiers that may be unique on a small scale prove to be so no longer on a larger scale. In his own family the identifier "Jan" is sufficient to indicate the person in question. When another "Jan" lives on the street, then "Jan" is ambiguous in the context of the street, i.e. we no longer know whom "Jan" refers to since several persons have the same name. An identifier that works well on a small scale no longer works on a larger scale and must be replaced by an identifier which contains additional information, such as a last name, for example. If we want to look up Jan in the telephone directory (an even larger context), then "Jan Jansen" is no longer an identifier and we must also give the street name, house number and city name.

The additional information that is necessary to identify someone or something in a given context (from now on this will be called "an entity") differs according to context. For the telephone directory this is the street name, house number and city name. Within the context of Jan's job this would be his employee number. Within the context of his insurer this would be the relation number. For taxes this would be the SOFI number.

Within large contexts that are divided up into several small contexts it is inefficient to have to look up what context-dependent information must be provided every time a certain entity (person or thing) is referred to. When a person from n contexts has to be looked for in m other contexts, then n x m translations of an identifier are available.

If the context becomes even larger (and therefore covers several smaller contexts, which in turn may themselves cover several even smaller contexts, etc.) it is increasingly more difficult for the planners to investigate what type of identifiers are necessary within such a broad context and what translations of them are now precisely necessary so that the desired effect is guaranteed, i.e. that each (translated) identifier unequivocally denotes an entity and is thus not ambiguous.

When planners make errors here the consequences are serious. Errors of this type are always manifested late in the development program so that corrections take longer and are more invasive than when the errors are brought to light in the planning phase. Since the problem occurs, above all, in large contexts, the chance exists that errors of this type will only appear when the system is already operational, making the corrections even more costly.

The present invention is intended to make a positive contribution to solving the set of problems discussed above. The invention concerns a method and a system including the steps and the means for implementing the steps.
1. registration, either distributed or not, of identifier types, wherein each identifier type (IDT) is characterized by
   a. an identifier type name (IDTName) that is unique within said registration of identifier types,
   b. a context name (Cname),
   c. a symbol type (ST), i.e. a procedure P which, when P is carried out on a row[line or series] of bits, determines whether said row of bits can or cannot be a symbol for identifiers of the IDT type and
   d. an entity type name (Ename);
2. registration, either distributed or not, of identifiers, wherein each identifier (ID)
   a. consists of a symbol S (that can be represented by a row of bits), and
   b. is an instance of an identifier type IDT from the registration of identifier types;
3. registration, either distributed or not, of entities;
4. registration, either distributed or not, of entity types (ET), wherein it is specified of each entity E in the registration of entities of which entity type(s) ET E is an instance;
5. registration, either distributed or not, of identifications, where each identification is a specification of one identifier ID and one entity E, and the meaning of the specification is that an identifier ID identifies an entity E;
6. a number of rules, each of which concerns identifiers and/or identifier types and/or entities and/or entity types and/or identifications such as those that are registered in said registration, and of which it can be acertained whether the identifiers and/or identifier types and/or entities and/or entity types and/or identifications such those registered in said registrations satisfy the rule.
   This concerns, for example, the following rules:
   a. each identifier identifies (refers to) at most one entity;
   b. each identifier identifies (refers to) at least one entity;
   c. each identifier is associated with precisely one identifier type;
   d. each identifier is associated with precisely one symbol;
   e. each identifier is uniquely characterized by (i) its identifier type (which is uniquely characterized by its search key type and its search environment) and (ii) its identifier symbol (=the name of the entity to which the identifier refers);
   f. each identifier type is associated with precisely one context;
   g. each identifier type is associated with precisely one symbol type;
   h. each symbol type is associated with at least one identifier type;
   i. each identifier type is uniquely characterized by its context and its symbol type;
   j. for each identifier its symbol must agree with the symbol type linked to the same identifier;
   k. in order to be able to interpret (translate) a symbol you must have: (i) the context in which the symbol has to be interpreted (ii) the symbol type that must be used in the context and (iii) the symbol itself;
   l. to interpret symbols as an identifier the identifier type as which it must be interpreted must be known, which must be an existing combination of context and symbol type;
   m. to interpret symbols as an identifier the name as well as the identifier type must be known.
   n. when an entity is found, then this is the entity that is identified by the identifier constructed from the symbol;
   o. each identifier type is associated with precisely one entity class;
   p. each entity is associated with precisely one entity class;
   q. each identifier (=instance of an identifier type) referring to an entity (=instance of the pertinent entities class), may only do that when the identifier type is associated with the entities class;
7. a registration of signaling tables, wherein each signaling table is coupled to one of the rules as specified before, in which case the table provides information with regard to the identifiers and/or identifier types and/or entities and/or entity types and/or identifications that does not satisfy the rule linked to the table;
8. a control unit that controls the degree to which the population of the registrations of identifiers, identifier types, entities, entity types and identifications satisfy the rules, and for each rule fills the signaling table associated with it with information on found rule infringements;
9. one or more data interfaces with which elements of said registrations can be filled, viewed, modified or removed. In embodiments of the invention such a data interface may be a graphic user interface (GUI) with which people can use the invention. In another embodiment, such a data interface may be a link to operational systems with which they can introduce newly issued names or remove old names;
10. one or more signaling interfaces with which the signaling tables can be queried and/or viewed. In embodiments of the device such a signaling interface may be a graphic user interface (GUI) with which people can view the signalings and/or generate reports. In another embodiment, such a signaling interface may be a link to operational systems with which they can determine for names to be newly issued whether the latter could possibly lead to problems.

According to one or more preferred aspects of the invention, first the registrations of identifier types, identifiers, entities and entity types and identifications are introduced by means of data interfaces set up for that purpose. Each time an element is added to, altered or removed from one of these registrations, the signaling tables are computed by applying the rules to the populations of the registrations and filling each signaling table with data on the parts of the population that do not satisfy the rule with which the signaling table is associated. By viewing these tables, and asking for a specific combination of identifier type and/or identifier and/or entity and/or entity type and/or identification the software application c.q. planner can determine whether there are problems with the population, search for solutions, enter them in the device and continue doing so until all rules are satisfied, which can be seen when all signaling tables (that come into question according to the user) are empty.

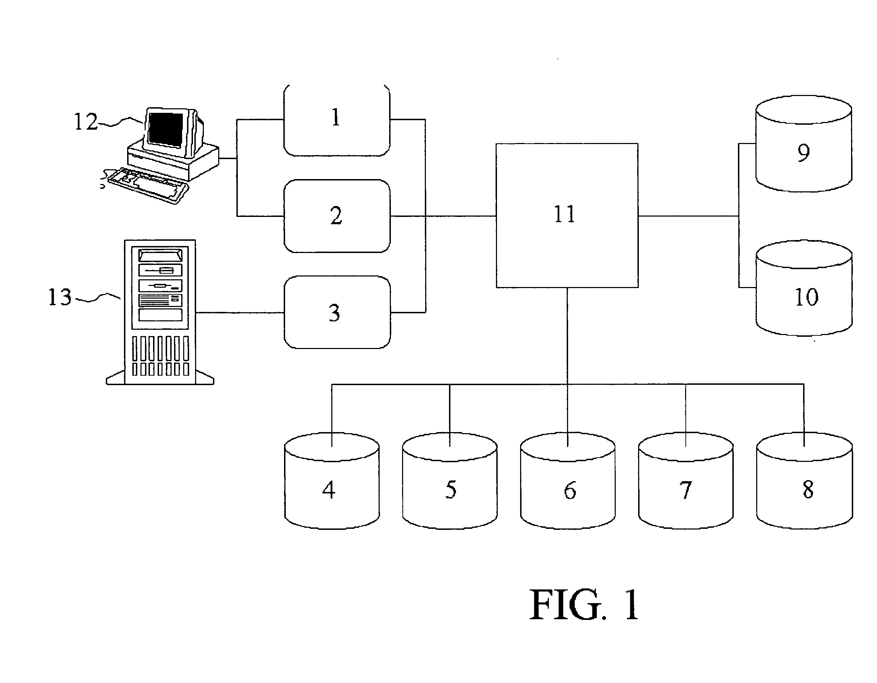

Figure 1 shows a preferred variant of a system of the invention. The system includes a signaling interface 1, a data interface 2 and a data interface 3; also storage media for the registration of identifier types 4, identifiers 5, entity types 6, entities 7 and identifications 8, and finally storage media for signaling tables 9 and rules 10. The functioning of the different units is controlled and coordinated by a control device 11. The system configuration shown in Figure 1 is connected to a terminal 12 and a server 13 via the interfaces 1, 2 and 3.

In Figure 1 the method according to the invention can be carried out, e.g., as follows. Assume a retailer R1 of an Internet business IB wants to give the e-mail address jansen@ib.com to Mr. Jansen (who has just become a customer of R1), and IB has a system according to the invention. R1 makes an e-mailbox Eb for Mr.Jansen and then sends a report (either directly via terminal 12, or via the ordering system of R1 that is running on server 13) to control device 11, with the question of whether the identifier Id1 consisting of the symbol 'jansen@ib.com' being of the type 'emailaddress', can be issued and linked to Eb. Control device 11 then makes a return [backup] point, i.e. takes all measures necessary to be able to restore the status of the database as it is at that moment (this is a standard feature of databases). Then control device 11 adds an identification E1 to storage medium 8, consisting of the pair (Id1, Eb). After this the control device 11 checks whether there are rules in the storage medium 10 that have been violated. The storage media 3 through 8 are also consulted for checking the rules. In the event that no rule infringements have been found, control device 11 accepts the modification in storage medium 8 and sends a report to R1 that 'jansen@ib.com' is a registered symbol of the emailbox type and is linked to Eb. In the event that one or more rules infringements are found, then depending on the implementation by control device 11:
1) the restoration [backup] point can be used to restore all databases to their initial position, or
2) a signaling (s, (Id2, Eb)) can be included in storage medium 9 with which it is reported that identification (Id1, Eb) does not satisfy the rules.
   In both cases a report is sent to R1 stating that the request cannot be acceded to, at the same time reporting which rule would be violated by so doing.

## Claims

1. Method including the following steps:
- registration, either distributed or not, of identifier types, in which each identifier type IDT is **characterized by** (a) an identifier type name IDTName that is unique within said registration of identifier types, (b) a context name (Cname), (c) a symbol type ST, i.e. a procedure P which, when P is implemented on a row of bits, determines whether said bit row can or cannot be a symbol for identifiers of the IDT type, and (d)an entity type name Ename;
- registration, either distributed or not, of identifiers in which each identifier ID (a) consists of a symbol S (which can be represented by a row of bits), and (b) is an instance of an identifier type IDT from the registration of identifier types;
- registration, either distributed or not, of entities;
- registration, either distributed or not, of entity types (ET), wherein it is specified of each entity E in the registration of entities of which entity types E is an instance;
- registration, either distributed or not, of identifications, where each identification is a specification of one identifier ID and one entity E, and the meaning of the specification is that ID identifies E;
- a number of rules, each of which concerns identifiers and/or identifier types and/or entities and/or entity types and/or identifications such as those that are registered in said registration, and of which it can be established whether the identifiers and/or identifier types and/or entities and/or entity types and/or identifications such as are registered in said registrations satisfy the rule.
- a registration of signaling tables, wherein each signaling table is coupled to one of the rules as specified before, the table providing information with respect to the identifiers and/or identifier types and/or entities and/or entity types and/or identifications that does not satisfy the rule linked to the table;
- a control unit that controls the degree to which the populations of the registrations of identifiers, identifier types, entities, entity types and identifications satisfy the rules, and for each rule fills the signaling table associated with it with information on found rule violations;
- one or more data interfaces with which elements of said registrations can be filled, viewed, modified or removed. In embodiments of the invention such a data interface may be a graphic user interface (GUI) with which people can use the device. In another embodiment, such a data interface may be a link to operational systems with which they can introduce newly issued names or remove old names;
- one or more signaling interfaces with which the signaling tables can be queried and/or viewed. In embodiments of the invention such a signaling interface may be a graphic user interface (GUI) with which people can view the signalings and/or generate reports. In another embodiment, such a signaling interface may be a link to operational systems with which they can determine for names to be newly issued whether the latter could possibly lead to problems.

2. Method according to claim 1, including the following rules:
- each identifier identifies (refers to) at most one entity;
- each identifier identifies (refers to) at least one entity;
- each identifier is associated with precisely one identifier type;
- each identifier is associated with precisely one symbol;
- each identifier is uniquely **characterized by** (i) its identifier type (which is uniquely **characterized by** its search key type and its search environment) and (ii) its identifier symbol (=the name of the entity to which the identifier refers);
- each identifier type is associated with precisely one context;
- each identifier type is associated with precisely one symbol type;
- each symbol type is associated with precisely one identifier type;
- each identifier type is uniquely **characterized by** its context and its symbol type;
- for each identifier its symbol must agree with the symbol type linked to the same identifier;
- in order to be able to interpret (translate) a symbol you must have: (i) the context in which the symbol has to be interpreted (ii) the symbol type that must be used in the context and (iii) the symbol itself;
- to interpret symbols as an identifier the identifier type as which it must be interpreted must be known, which must be an existing combination of context and symbol type;
- to interpret symbols as an identifier the name as well as the identifier type must be known.
- when an entity is found, then this is the entity that is identified by the identifier constructed from the symbol;
- each identifier type is associated with precisely one entity class;
- each entity is associated with precisely one entity class;
- each identifier (=instance of an identifier type) referring to an entity (=instance of the pertinent entity class), may only do that when the identifier type is associated with the entities class;

3. Method according to claim 1, in which
- first the registrations of identifier types, identifiers, entities and entity types and identifications are introduced by means of data interfaces set up for that purpose;
- each time an element is added to, altered or removed from one of these registrations, the signaling tables are computed by applying the rules to the populations of the registrations and filling each signaling table with data on the parts of the population that do not satisfy the rule with which the signaling table is associated.
